# EUROPEAN PATENT APPLICATION

(11) **EP 4 650 232 A1**
(43) Date of publication of application: **19.11.2025**
(21) Application number: 25382167.2
(22) Date of filing: 25.02.2025
(51) Int. Cl.: B60T 3/00, B60P 3/077, B65G 69/00

(54) **WHEEL CHOCK AND VEHICLE DOCK SYSTEM WITH WHEEL CHOCK**

(71) Applicant: Claitec Solutions, SLU, 17003 Girona (ES)
(72) Inventor: PLANAS DE FARNÉS VALENTÍ, Joan Maria, 17003 Girona (ES); CHETRIT RUSSI, Ricard, 17001 Girona (ES)
(74) Representative: Torner, Juncosa I Associats, SL

(57) **Abstract**

Wheel chock comprising a first toothed element (10), a second toothed element (20) movable, actuated by an actuation mechanism (30), in a horizontal direction (XD1, XD2), between a strip release position and a strip gripping position; a locking device (40) movable between a locked position and an unlocked position, wherein the actuation mechanism (30) comprises an elastically loaded spring (31) connected to the second toothed element (20) and to the locking device (40); the actuation mechanism (30) is a bistable mechanism movable between a first position where the spring (31) urges the locking device (40) to the unlocked position and simultaneously urges the second toothed element (20) towards the strip release position, and a second position where urges the second toothed element (20) towards the strip gripping position and simultaneously urges the locking device (40) to the locked position.

## Description

### Technical field

The present invention is directed to a wheel chock attachable to strips protruding from a base plate, intended to be placed closely against a vehicle's wheels to prevent accidental movement thereof.

The base plate includes a plurality of parallel protruding strips, and the wheel chock includes a first toothed element with a plurality of first tooth and a second toothed element with a plurality of second tooth.

The wheel chock is located on top of the base plate, with the first and second tooth inserted between the protruding strips, and the second toothed element is movable in regards the first toothed element in a horizontal direction by an actuation mechanism to reach a strip gripping position in which the first and second tooth get engaged with the protruding strips providing retention of the wheel chock to the base plate.

The invention is also directed to a vehicle dock system integrating the wheel chock above mentioned.

### Background of the Invention

Wheel chock to immobilize a vehicle adjacent to a dock platform are known, for example through documents US10793119B2, US11479217B2 and WO2022016265A1.

Those documents describe solutions where the wheel chock can be removed from its position by accident, or at an inappropriate time by a user, what can cause an accident.

The present invention solves the above and other problems.

### Description of the Invention

According to a first aspect, the present invention concerns a wheel chock attachable to strips protruding from a base plate, as defined in claim 1.

The proposed wheel chock comprises:
a first toothed element including at least one first tooth protruding downwards therefrom, each first tooth defining one concave side,
a second toothed element including at least one second tooth protruding downwards from the second toothed element, each second tooth defining one concave side opposed to the concave side of each first tooth,
the second toothed element is movable, actuated by an actuation mechanism, in regard to the first toothed element in a horizontal direction, between a strip release position and a strip gripping position;
a locking device adapted to be alternatively in a locked position where the movement of the second toothed element in the horizontal direction is prevented and in an unlocked position where the movement of the second toothed element in the horizontal direction is permitted.

In the strip gripping position, the distance between the first tooth and the second tooth is adjusted to engage with the strips protruding from the base plate, retaining said strips between the first and second tooth preventing the separation of the wheel chock from the base plate, and in the strip release position the distance between the first tooth and the second tooth is modified to disengage from the strips, releasing the wheel chock from the base plate.

The above mentioned locking device can be positioned in the locked position, where it retains the second toothed element in the strip gripping position preventing its movement in the horizontal direction, and in the unlocked position, where the second toothed element is not retained allowing its free movement in the horizontal direction between the strip gripping position and the strip releasing position.

In addition, the proposed wheel chock further comprises the following features:
the actuation mechanism comprises an elastically loaded spring connected to the second toothed element and to the locking device;
the locking device is movable in a vertical direction between the unlocked position and the locked position, in regards the first toothed element, only when the second toothed element is in the strip gripping position; and
the actuation mechanism is a bistable mechanism movable between a first position where the spring urges the locking device to the unlocked position and simultaneously urges the second toothed element towards the strip release position, and a second position where the spring urges the second toothed element towards the strip gripping position and simultaneously urges the locking device to the locked position.

A bistable mechanism is a mechanism that can only remain stable in two positions, but not in between where the mechanism is unstable and naturally moves towards one of the two stable positions.

In this case, the only stable positions are the first position and the second position.

When the actuation mechanism is in the first position, the elastically loaded spring connecting the actuation mechanism with the locking device and with the second toothed element urges the locking device to the unlocked position and simultaneously urges the second toothed element towards the strip release position.

When the actuation mechanism is in the second position, the elastically loaded spring urges the second toothed element towards the strip gripping position and simultaneously urges the locking device to the locked position.

Typically, the elastically loaded spring is a tractioned spring which urges the second toothed element and the locking device by pulling. Despite the above, the spring can also be a compressed spring urges the second toothed element and the locking device by pushing.

It will be understood that the expression "elastically loaded spring" covers not only a rigid element subjected to elastic deformation, such a coil-shaped metallic bar, but also covers other solutions which provides an equivalent result, such an elastomeric block, an elastomeric band, a sealed pneumatic piston, etc.

According to a second aspect, the present invention concerns a vehicle dock system with wheel chock, as defined in claim 14.

It will be understood that references to geometric position, such as parallel, perpendicular, tangent, etc. allow deviations up to ± 5° from the theoretical position defined by this nomenclature.

### Brief description of the Figures

The foregoing and other advantages and features will be more fully understood from the following detailed description of an embodiment with reference to the accompanying drawings, to be taken in an illustrative and non-limitative manner, in which:
Fig. 1 shows a schematic lateral view of the wheel chock, positioned in the strip release position, according to a first embodiment in which the locking device is a pin inserted through fourth guide of the second toothed element and through the L-shaped guide of the first toothed element, connecting the first and second toothed elements and limiting the displacement of the second toothed element to the horizontal direction.
Fig. 2 shows the same schematic lateral view of the wheel chock shown in Fig. 1 but in the strip gripping position.
Fig. 3 shows an exploded view of the wheel chock shown in Figs. 1 and 2.
Fig. 4 shows a schematic lateral view of the wheel chock, positioned in the strip release position, according to a second embodiment in which the locking device is a plate including the L-shaped guide, and the second toothed element includes a follower pin inserted through said L-shaped guide.
Fig. 5 shows the same schematic lateral view of the wheel chock shown in Fig. 4 but in the strip gripping position.
Fig. 6 shows the same schematic lateral view of the wheel chock shown in Fig. 1 but with a different configuration of the first and second tooth.

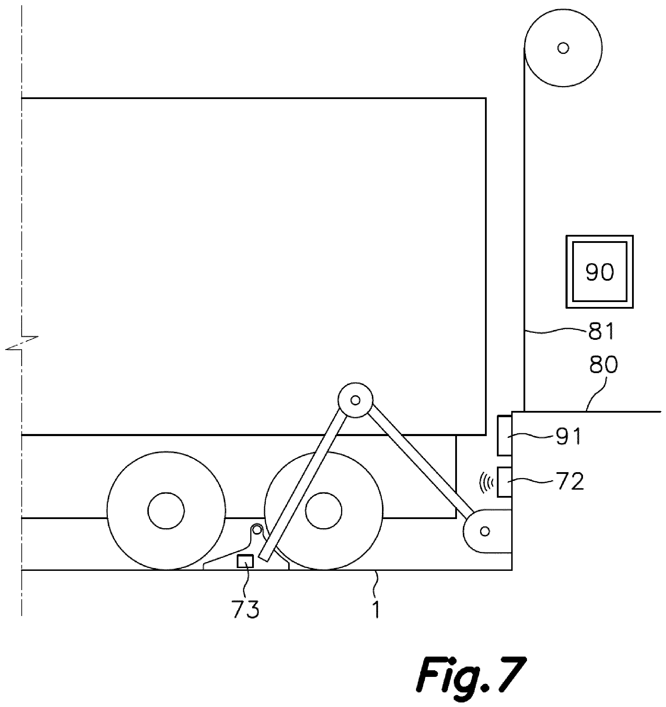

Fig. 7 shows a schematic lateral view of the vehicle dock system including a dock platform and a vehicle parked in an unload position adjacent to the dock platform.

### Detailed Description of the Invention and of particular embodiments

According to a first aspect, the present invention concerns a wheel chock attachable to strips protruding from a base plate for providing a secure lock for a wheel of a truck or similar vehicle, as described in claim 1.

The base plate includes a plurality of strips, typically parallel strips, protruding from the base plate. Preferably each strip has a portion with an increasing cross section as the distance from the base plate increases.

In the preferred example, the strips are hexagonal bars with one face in contact with the base plate welded thereto.

The proposed wheel chock comprises a first toothed element 10 including at least one first tooth 11 protruding downwards therefrom, each first tooth 11 defining one concave side.

Typically, the first toothed element 10 is constituted by, or integrated in, the casing of the wheel chock. Also, it is preferred to include more than one first tooth 11.

In the preferred example, the first toothed element 10 includes two parallel rows of first teeth, each row comprising a succession of first teeth.

The wheel chock also comprises a second toothed element 20 including at least one second tooth 21 protruding downwards from the second toothed element 20.

The second toothed element 20 is movable, actuated by an actuation mechanism 30, in regard to the first toothed element 10 in a horizontal direction XD1, XD2, between a strip release position and a strip gripping position.

Each second tooth 21 defines one concave side opposed to the concave side of each first tooth 11, i.e. the concave side of each first tooth is oriented in one horizontal direction and each second tooth has a concave side oriented in another horizontal direction opposed to the above mentioned horizontal direction of the concave side of each first tooth.

In the preferred example, the second toothed element 20 includes two parallel rows of second teeth, each row comprising a succession of second teeth.

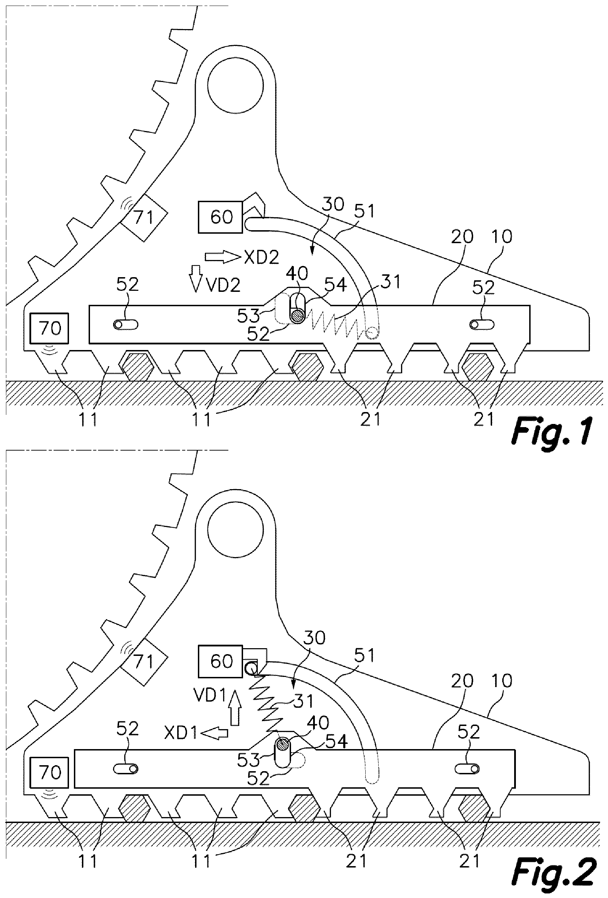

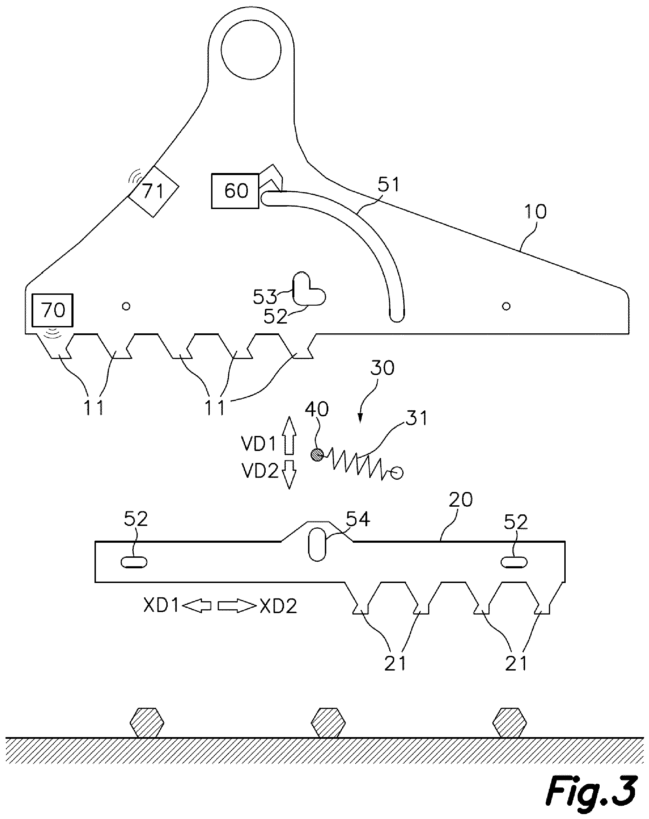

The mentioned at least one first tooth can have the concave side oriented towards the concave side of the at least one second tooth, said concave sides being facing each other, as shown for example in Figs. 1, 2 and 3, in which case when the second toothed element is in the strip gripping position the distance between each first tooth and a corresponding second tooth will be smaller than that same distance when the second toothed element is in the strip release position.

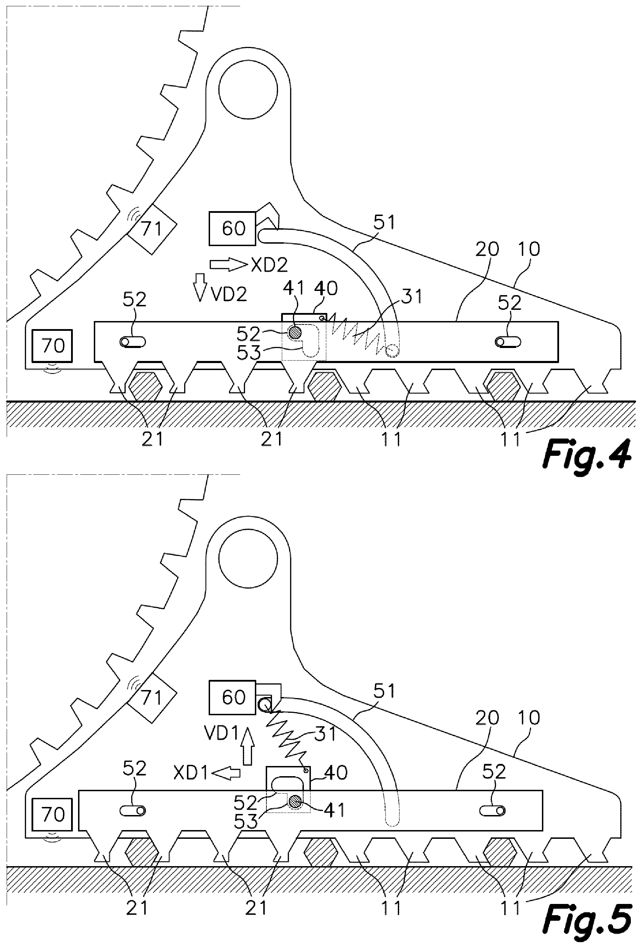

Alternatively, the at least one first tooth may have the concave side with an orientation opposed to the orientation of the concave side of the at least one second tooth, as shown for example in Figs. 4 and 5, in which case when the second toothed element is in the strip gripping position the distance between each first tooth and a corresponding second tooth will be bigger than that same distance when the second toothed element is in the strip release position.

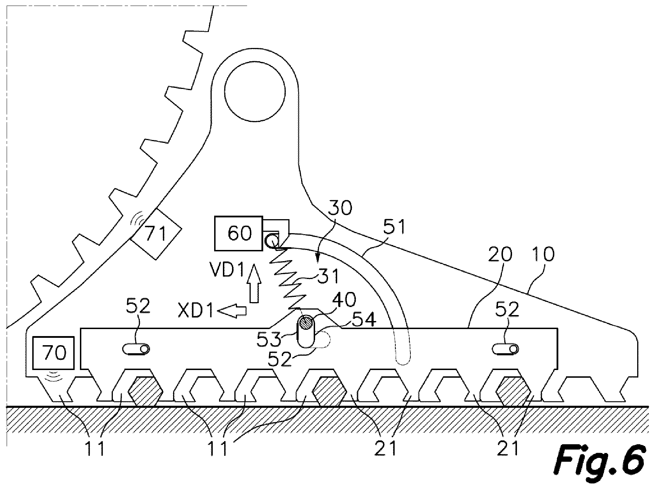

According to the embodiment shown in Fig. 6, each first tooth is paired with one second tooth with the respective concave sides oriented one towards the other, forming in between a concavity where one strip can be gripped.

The wheel chock also includes a locking device 40 adapted to be moved alternatively between a locked position, where the locking device 40 prevents the movement of the second toothed element 20 in the horizontal direction XD1, XD2, and an unlocked position, where the locking device 40 does not prevent the movement of the second toothed element 20 in the horizontal direction XD1, XD2.

The actuation mechanism 30 comprises an elastically loaded spring 31 connected to the second toothed element 20 and to the locking device 40.

The actuation mechanism 30 is a bistable mechanism movable between a first position and a second position.

In the first position, the elastically loaded spring 31 urges the locking device 40 towards the unlocked position, where the horizontal movement of the second toothed element 20 is permitted, and simultaneously urges the second toothed element 20 towards the strip release position, where the wheel choke is ungripped from the strips of the base plate.

In the second position, the elastically loaded spring 31 urges the second toothed element 20 towards the strip gripping position, producing the attachment of the wheel chock to the strips of the base plate, and simultaneously urges the locking device 40 towards the locked position where the horizontal movement of the second toothed element 20 is prevented.

Typically, spring 31 is an elastically tractioned spring which, in the first position, pulls the locking device 40 towards the unlocked position and simultaneously pulls the second toothed element 20 towards the strip release position, and which in the second position, pulls the locking device 40 towards the locked position and simultaneously pulls the second toothed element 20 towards the strip gripping position. Spring 31 can be one or multiple springs.

The locking device 40 is movable in a vertical direction VD1, VD2 with respect to the first toothed element 10 between the unlocked position and the locked position. Said movement of the locking device 40 is guided by a guide 52, 53, 54 configured to allow movement of the locking device 40 towards the locked position only when the second toothed element 20 is in the strip gripping position.

According to the above, the actuation mechanism 30 is a bistable mechanism, i.e. a mechanism which can be resting in either of two stable positions, which are the first position and the second position.

In the first position the actuation mechanism 30 produces the movement of the locking device 40 in the vertical direction to the unlocked position and, simultaneously, produces the movement of the second toothed element 20 in the horizontal direction to the strip release position.

Similarly, in the second position the actuation mechanism 30 produces the movement of the second toothed element 20 in a horizontal direction (opposed to the horizontal direction mentioned in regards the first position of the actuation mechanism 30) to the strip gripping position, and simultaneously produces the movement of the locking device 40 in a vertical direction (opposed to the vertical direction mentioned in regards the first position of the actuation mechanism 30) to the locked position, thereby ensuring that whenever the second toothed element 20 reaches the strip gripping position, the locking device 40 is inevitably placed in the locking position preventing the movement of the second toothed element 20 towards the strip release position.

Accordingly, the actuation mechanism 30, when in the first position, urges the second toothed element 20 in a first horizontal direction XD1 and urges the locking device 40 in a first vertical direction VD1, and in the second position, urges the second toothed element 20 in a second horizontal direction XD2 opposed to the first horizontal direction XD1 and urges the locking device 40 in a second vertical direction VD2 opposed to the first vertical direction VD1.

Preferably, the spring 31 has a first end connected to the locking device 40 and to the second toothed element 20 and a second end movable in regards the first toothed element 10, the actuation mechanism 30 being configured to move the second end of the spring 31 changing the orientation of the spring 31 between a first orientation, in which the elastic force applied by the spring 31 on the first end has a component in the first horizontal direction XD1 and a component in the first vertical direction VD1, and a second orientation, in which the elastic force applied by the spring 31 on the first end has a component in the second horizontal direction XD2 and a component in the second vertical direction VD2.

The second end of the spring 31 can be, for example, guided by a first guide 51, or by a first guide 51 which is arch-shaped.

The second end of the spring 31 can be connected to an actuator included in the actuation mechanism 30.

For example, the actuator can be a lever accessible from the outside of the casing by a user. In addition, or as an alternative, the actuation mechanism can include an electrical motor configured to produce the movement of the second end of the spring 31. As will be evident for a skilled person, the electrical motor will be feed with electricity through a cable connected to the wheel chock of through a battery contained within the wheel chock.

The electrical motor can be wirelessly connected to a remote control device through an antenna, allowing for a remote actuation of the electrical motor of the actuation mechanism.

Optionally, the spring 31 can be connected to the locking device 40. In this case, the locking device 40 will be connected to the second toothed element 20 for a solidary movement of the locking device 40 and the second toothed element 20 in the horizontal direction XD1, XD2, the movement of the locking device 40 dragging the second toothed element 20 therewith.

The second toothed element 20 is preferably guided in the horizontal direction XD1, XD2, between the strip release position and the strip gripping position, by a second guide 52 and the locking device 40 is guided in the vertical direction VD1, VD2, between the unlocked position and the locked position by a third guide 53. This example can be seen in Figs. 1, 2 and 3.

Preferably, the third guide 53 is included in the first toothed element 10 and the locking device 40 is aligned in the vertical direction VD1, VD2 with the third guide 53 only when the second toothed element 20 is in the strip gripping position, typically at one end of the second guide 52.

According to the preferred embodiment, the second guide 52 and the third guide 53 are connected in continuity forming an L-shaped guide 52, 53 and are attached to, or included into, the first toothed element 10. The second toothed element 20 is guided along the second guide 52 through the locking device 40 inserted in the L-shaped guide 52, 53, said locking device 40 guiding the movement of the second toothed element 20 in the horizontal direction while the locking device 40 remains inserted in the second guide 52 and, when reaches the strip gripping position, the locking device 40 is vertically aligned with the third guide 53, so that the locking device 40 can move vertically along said third guide 53 without producing movement of the second toothed element 20 in the horizontal direction.

Preferably, the locking device 40 is also movable in the vertical direction VD1, VD2 regards to the second toothed element 20 along a fourth guide 54 attached to, or included into, the second toothed element 20. This allows the movement of the locking device 40 in the vertical direction without producing a vertical movement of the second toothed element 20.

The combination of the fourth guide 54 and the L-shaped guide 52, 53 permits the vertical movement of the locking device 40 only when the second toothed element 20 is in the strip gripping position aligning the fourth guide 54 with the third guide 53.

Alternatively, the second guide 52 and the third guide 53 are connected in continuity forming an L-shaped guide 52, 53 and are attached to, or integrated into, the locking device 40. In this case, a follower 41 is attached to the first toothed element 10 and is inserted in the L-shaped guide 52, 53 of the locking device 40.

According to this embodiment, the follower 41 is aligned in the vertical direction VD1, VD2 with the third guide 53 only when the second toothed element 20 is in the strip gripping position, allowing the vertical movement of the locking device 40 when this occurs.

When the locking device 40 moves in the vertical direction to the locking position, it engages with the first toothed element 10, preventing the movement of the second toothed element in the horizontal direction.

According to another embodiment of the invention, the wheel chock may further comprise a retainer 60, or a retainer 60 configured to selectively retain the actuation mechanism 30 in the second position, maintaining the second toothed element 20 in the strip gripping position and preventing the actuation mechanism 30 to be moved to the first position.

The retainer may consisting of an electro-mechanical latch, or an electro-mechanical latch wirelessly connected to a remote control device via an antenna. This allows the remote control of the retainer 60, preventing an unintended manipulation of the actuation mechanism.

The first toothed element 10 is, or comprises, a casing, or a wedge-shaped casing, containing the second toothed element 20 and the actuation mechanism 30 in its interior.

The wheel chock may further comprise a first sensor 70, or a first sensor 70 consisting of an inductive sensor, configured to detect the presence of a base plate and/or a protruding strip located below the wheel chock. The inductive sensor can detect the base plate and/or the strips when those are made or contain metal.

The wheel chock may further comprise a second sensor 71, or a second sensor 71 consisting of an inductive sensor, configured to detect the presence of a wheel adjacent to the wheel chock. The inductive sensor can detect the metallic reinforcing wires embedded within the wheel.

The first sensor 70 and/or the second sensor 71 can be wirelessly connected to a remote control device via an antenna.

The remote control can obtain information of the position of the wheel chock thanks to the first and/or second sensors.

According to a second aspect, the present invention concerns to a vehicle dock system with wheel chock, as described in claim 14.

The vehicle dock system comprises a dock platform 80 with a dock door 81, a base plate 1 with strips protruding therefrom, adjacent to the dock platform in front of the dock door and at a lower level than the dock platform 80, and a vehicle position detector 72 configured to detect when a vehicle reaches an unloading position adjacent to the dock door 81, and to emit a first compliance signal in response to said detection.

The vehicle position detector can be, for example, an ultrasonic proximity detector, a radar detector, a laser detector, an inductive detector, a contact detector, etc.

The vehicle dock system further comprises a wheel chock as described in any preceding claim, associated with the dock platform, or connected to the dock platform through an articulated arm. Said articulated arm can be, for example, an articulated lift assist arm which supports at least partially the weight of the wheel chock.

The vehicle dock system also comprises at least one wheel chock status sensor 73 configured to detect when the wheel chock is in operational position by detecting when the wheel chock is in the strip gripping position; when is located over the base plate; when is located next to a wheel of the vehicle; when the articulated arm is in an extended position; and/or in any combination of the above circumstances; and to emit a second compliance signal in response to said detection.

The wheel chock status sensor 73 can be integrated in the wheel chock itself, being or including for example a position sensor which monitors the position of any component of the actuation mechanism 30, of the lever which actuates the actuation mechanism 30 or of the second toothed element 20. This detection can be performed, for example, through an inductive sensor, a magnetic sensor or a contact sensor.

Alternatively, the wheel chock status sensor 73 can be, or can include, the retainer 60 himself, which emits a signal when the actuation mechanism reaches the second position and interacts with the latch of the retainer 60.

According to another embodiment, the wheel chock status sensor 73 be, or can include, the first sensor 70, or the second sensor 71 mentioned above. Also, the wheel chock status sensor 73 can be at least partially integrated in the articulated arm to detect its position.

The vehicle dock system also includes an inner interface 90 accessible for a user located on the dock platform, on one inner side of the dock door 81. The inner interface 90 controls the dock door 81 and is configured to allow the opening of the dock door 81 only during the simultaneous duration of the first and second signals.

In other words, the dock door 81 can only be opened as long as the vehicle remains detected in in the unloading position and as long as the wheel chock remains detected by the wheel chock status sensor 73 in the predefined position.

This prevents the opening of the dock door until the vehicle is in the unload position and the wheel chock is locked in its position, preventing accidents.

The first and second compliance signals shall be understood to be either signals emitted continuously as long as the detection triggering those signals is maintained, or signals defined by a start signal, emitted when the detection triggering that signal occurs, and an end signal, emitted when the detection triggering that signal is no longer detected. In the latter case, the first and the second compliance signal shall be considered to last for the entire time between the corresponding start signal and end signal.

The vehicle dock system further includes an outer interface, accessible for a user located outside the dock platform 80; configured to emit visual signals, for example through a screen or a traffic light, in response to the first compliance signal, to the second compliance signal and in response to the open or closed position of the dock door.

This ensures that the driver of the vehicle is aware of the situation at all times.

Optionally, the wheel chock is the wheel chock described in claim 12, which includes a retainer 60. In this case, the release of the retainer 60 is controlled from the inner interface and/or from the outer interface, which is configured to allow said release of the retainer 60 only when the dock door is closed.

Additionally or alternatively, the wheel chock is the wheel chock described in claim 5, which includes an electrical motor to actuate the actuation mechanism 30, and the actuation of the electrical motor to move the actuation mechanism 30 from the second position to the first position is controlled from the inner interface, and/or from the outer interface, which is configured to allow said actuation only when the dock door is closed.

This prevents the removal of the wheel chock until the dock door 81 is closed, preventing accidents.

## Claims

1. Wheel chock attachable to strips protruding from a base plate, the wheel chock comprising:
a first toothed element (10) including at least one first tooth (11) protruding downwards therefrom, each first tooth (11) defining one concave side,
a second toothed element (20) including at least one second tooth (21) protruding downwards from the second toothed element (20), each second tooth (21) defining one concave side opposed to the concave side of each first tooth (11),
the second toothed element (20) is movable, actuated by an actuation mechanism (30), in regard to the first toothed element (10) in a horizontal direction (XD1, XD2), between a strip release position and a strip gripping position;
a locking device (40) movable between a locked position, where the locking device (40) prevents the movement of the second toothed element (20) in the horizontal direction (XD1, XD2), and an unlocked position, where the locking device (40) does not prevent the movement of the second toothed element (20) in the horizontal direction (XD1, XD2);
**characterized in that**
the actuation mechanism (30) comprises an elastically loaded spring (31) connected to the second toothed element (20) and to the locking device (40);
the actuation mechanism (30) is a bistable mechanism movable between a first position where the spring (31) urges the locking device (40) to the unlocked position and simultaneously urges the second toothed element (20) towards the strip release position, and a second position where the spring (31) urges the second toothed element (20) towards the strip gripping position and simultaneously urges the locking device (40) to the locked position; and
the locking device (40) is movable in a vertical direction (VD1, VD2) with respect to the first toothed element (10) between the unlocked position and the locked position, said movement being guided by a guide (52, 53) configured to allow movement of the locking device (40) towards the locked position only when the second toothed element (20) is in the strip gripping position.

2. The wheel chock according to claim 1 wherein the actuation mechanism (30), in the first position, urges the second toothed element (20) in a first horizontal direction (XD1) and urges the locking device (40) in a first vertical direction (VD1), and in the second position, urges the second toothed element (20) in a second horizontal direction (XD2) opposed to the first horizontal direction (XD1) and urges the locking device (40) in a second vertical direction (VD2) opposed to the first vertical direction (VD1).

3. The wheel chock according to claim 1 or 2 wherein the spring (31) has a first end connected to the locking device (40) and to the second toothed element (20) and a second end movable in regards the first toothed element (10), the actuation mechanism (30) being configured to move the second end of the spring (31) changing the orientation of the spring (31) between a first orientation, in which the elastic force applied by the spring (31) on the first end has a component in the first horizontal direction (XD1) and a component in the first vertical direction (VD1), and a second orientation, in which the elastic force applied by the spring (31) on the first end has a component in the second horizontal direction (XD2) and a component in the second vertical direction (VD2).

4. The wheel chock according to claim 3 wherein the second end of the spring (31) is guided by a first guide (51), or by a first guide (51) which is arch-shaped.

5. The wheel chock according to claim 3 or 4 wherein the second end of the spring (31) is connected to an actuator included in the actuation mechanism (30), the actuator being a lever and/or an electrical motor or an electrical motor wirelessly connected to a remote control device through an antenna.

6. The wheel chock according to any preceding claim wherein the spring (31) is connected to the locking device (40), the locking device (40) is connected to the second toothed element (20) for a solidary movement in the horizontal direction (XD1, XD2) therewith.

7. The wheel chock according to claim 6 wherein the second toothed element (20) is guided in the horizontal direction (XD1, XD2), between the strip release position and the strip gripping position, by a second guide (52) and the locking device (40) is guided in the vertical direction (VD1, VD2), between the unlocked position and the locked position by a third guide (53).

8. The wheel chock according to claim 7 wherein the third guide (53) is included in the first toothed element (10) and wherein the locking device (40) is aligned in the vertical direction (VD1, VD2) with the third guide (53) only when the second toothed element (20) is in the strip gripping position.

9. The wheel chock according to claim 8 wherein the second guide (52) and the third guide (53) are connected in continuity forming an L-shaped guide (52, 53) and are attached to, or included into, the first toothed element (10), and wherein the second toothed element (20) is guided along the second guide (52) through the locking device (40) inserted in the L-shaped guide (52, 53).

10. The wheel chock according to claim 9 wherein the locking device (40) is also movable in the vertical direction (VD1, VD2) regards to the second toothed element (20) along a fourth guide (54) attached to, or included into, the second toothed element (20).

11. The wheel chock according to claim 7 wherein
the second guide (52) and the third guide (53) are attached to, or integrated into, the locking device (40) and are connected in continuity forming an L-shaped guide (52, 53);
a follower (41), attached to the first toothed element (10), is inserted in the L-shaped guide (52, 53), the follower (41) being aligned in the vertical direction (VD1, VD2) with the third guide (53) only when the second toothed element (20) is in the strip gripping position.

12. The wheel chock according to any preceding claim wherein the wheel chock further comprises a retainer (60), or a retainer (60) consisting of an electro-mechanical latch, or an electro-mechanical latch wirelessly connected to a remote control device via an antenna, the retainer (60) being configured to selectively retain the actuation mechanism (30) in the second position.

13. The wheel chock according to any preceding claim wherein the wheel chock further comprises:
a first sensor (70), or a first sensor (70) consisting of an inductive sensor, wirelessly connected to a remote control device via an antenna and configured to detect the presence of a base plate and/or a protruding strip located below the wheel chock; and/or
a second sensor (71), or a second sensor (71) consisting of an inductive sensor, wirelessly connected to a remote control device via an antenna and configured to detect the presence of a wheel adjacent to the wheel chock.

14. Vehicle dock system with wheel chock, wherein the vehicle dock system comprises:
a dock platform (80) with a dock door (81);
a base plate (1) with strips protruding therefrom, adjacent to the dock platform (80) in front of the dock door (81) and at a lower level than the dock platform (80);
a vehicle position detector (72) configured to detect when a vehicle reaches an unloading position adjacent to the dock door (81), and to emit a first compliance signal in response to said detection;
a wheel chock as described in any preceding claim, associated with the dock platform (80), or connected to the dock platform (80) through an articulated arm,
at least one wheel chock status sensor (73) configured to detect when the wheel chock is in operational position by detecting when the wheel chock is in the strip gripping position; when is located over the base plate; when is located next to a wheel of the vehicle; when the articulated arm is in an extended position; and/or in any combination of the above circumstances; and to emit a second compliance signal in response to said detection;
an inner interface (90) accessible for a user located on the dock platform (80); wherein
the inner interface (90) controls the dock door (81) and is configured to allow the opening of the dock door (81) only during the simultaneous duration of the first and second compliance signals; and
an outer interface (91), accessible for a user located outside the dock platform (80); configured to emit visual signals in response to the first compliance signal, to the second compliance signal and in response to the open or closed position of the dock door (81).

15. The vehicle dock system according to claim 14 wherein
the wheel chock is the wheel chock described in claim 12 and the release of the retainer (60) is controlled from the inner interface and/or from the outer interface, which is configured to allow said release of the retainer (60) only when the dock door is closed; and/or the wheel chock is the wheel chock described in claim 5 and the actuation of the electrical motor to move the actuation mechanism (30) from the second position to the first position is controlled from the inner interface, and/or from the outer interface, which is configured to allow said actuation only when the dock door is closed.
